(19) Europäisches Patentamt
European Patent Office
Office européen des brevets

(11) Publication number: **0 020 344**
**B1**

(12) # EUROPEAN PATENT SPECIFICATION

(45) Date of publication of patent specification: **26.10.83**

(51) Int. Cl.³: **B 32 B 27/36**, B 05 D 3/06, C 08 J 7/04, C 09 D 3/00, C 08 F 283/00, C 08 F 2/48

(21) Application number: **79900659.8**

(22) Date of filing: **29.10.79**

(86) International application number: **PCT/US79/00907**

(87) International publication number: **WO 80/00942 15.05.80 Gazette 80/11**

(54) **PHOTOCURABLE ACRYLIC COATED POLYCARBONATE ARTICLES.**

(30) Priority: **01.11.78 US 956882**

(43) Date of publication of application: **07.01.81 Bulletin 81/1**

(45) Publication of the grant of the patent: **26.10.83 Bulletin 83/43**

(84) Designated Contracting States: **DE FR GB NL**

(56) References cited:
GB - A - 1 441 108
US - A - 3 582 398
US - A - 3 968 305
US - A - 4 129 667

HANDBOOK OF CHEMISTRY AND PHYSICS 46th Edition, The Chemical Rubber Co., Cleveland, Ohio, Page C198

(73) Proprietor: **GENERAL ELECTRIC COMPANY**
**1 River Road**
**Schenectady New York 12305 (US)**

(72) Inventor: **MOORE, James Eugene**
**Woodin Road and Stephen Drive**
**R.D. 11, Clifton Park, NY 12065 (US)**
Inventor: **ORKIN, Ona Valys**
**849 DeCamp Avenue**
**Schenectady, NY 12309 (US)**
Inventor: **SCHROETER, Siegfried Herman**
**871 Maxwell Drive**
**Schenectady, NY 12309 (US)**

(74) Representative: **Schüler, Horst, Dr. et al,**
**Kaiserstrasse 41**
**D-6000 Frankfurt/Main 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 020 344 B1

# Photocurable acrylic coated polycarbonate articles

This invention relates to a non-opaque shaped polycarbonate article having on at least one surface thereof an ultraviolet light-curable non-opaque coating composition.

## BACKGROUND OF THE INVENTION

Polycarbonates are commercially important materials possessing excellent physical and chemical properties which are useful in a wide range application from non-opaque impact resistant sheets to shaped articles. Generally, however, polycarbonates have rather low scratch resistance and are somewhat susceptible to attack by many common solvents and chemicals.

Previous efforts to overcome this low scratch resistance and suspeptibility to attack by solvents have included lamination procedures and application onto the polycarbonate of a surface coating. Many of these prior art remedial efforts have been unsuccessful due to the incompatibility of the laminae and coating materials with the polycarbonate substrate. This incompatibility has resulted in stress cracking and crazing of the polycarbonate crack propagation into the polycarbonate as a result of the brittleness of the coating, and a reduction of the advantageous properties of the polycarbonate such as, for example, impact resistance, tensile strength, non-opacity and elongation.

The prior art coatings for polycarbonates have included organopolysiloxanes US—A—3,707,397; polyester-melamines or acrylic melamines, US—A—3,843,390; and allyl resins, US—A—2,332,461. These types of prior art coatings are generally applied from solutions of inert solvents and are cured to final properties by baking at elevated temperatures. The disadvantages of such systems are obvious. The heat curing requires a supply of thermal energy thereby adding to the cost of the system. Further, the thermal curing step is somewhat limited by the heat distortion temperature of the polycarbonate which is to be coated. Thus, in coating of polycarbonates, sheets of 0.76 mm (30 mils) and less generally cannot be coated and cured economically because of excessive warpage of the sheets during the thermal curing process.

It is also known in the art to impart abrasion resistance to the surface of a synthetic resin article by forming on the surface of said article a cured film containing, inter alia, a mixture of a compound having a total of at least three acryloxy and/or methacryloxy groups and a copolymerizable mono- or diethylenically unsaturated compound. Thus, for example, US—A—3,968,305 describes a synthetic resin shaped article having a mar-resistant polymer surface layer consisting essentially of, in polymerized form,

(a) 20 to 100 weight% of a compound having a total of at least three acryloxy and/or methacryloxy groups linked with a straight chain aliphatic hydrocarbon residue having not more than 20 carbon atoms and

(b) 0 to 80 weight% of at least one copolymerizable mono- or diethylenically unsaturated compound. A special Example (3) of this U.S. Patent describes a coating consisting of a mixture of 60 parts trimethylolethane triacrylate and 40 parts of polyethylene glycol dimethacrylate, photopolymerized with 2 parts benzoin ethyl ether. US—A—3,968,309 describes a molded article of plastic having on its surface a cured film of a coating material comprising at least 30% by weight of at least one polyfunctional compound selected from the group consisting of polymethacryloxy compounds having at least three methacryloxy groups in one molecule and a molecular weight of 250 to 800 and polyacryloxy compounds having at least three acryloxy groups in one molecule and a molecular weight of 250 to 800, and a fluorine-containing surfactant, in which the fluorine atom is bonded to a carbon atom.

From GB—A—1 441 108 it is furthermore known to use polyurethane for cross-linking reactions with polyfunctional acrylic acid ester monomers by UV-radiation curing techniques.

It has now been found that certain specific polyfunctional acrylic monomers in conjunction with certain acrylic modified polymers can be used to provide excellent UV cured coatings for polycarbonate.

## DESCRIPTION OF THE INVENTION

In accordance with the present invention, there is provided a non-opaque, shaped polycarbonate article having on at least one surface thereof, an ultraviolet light-curable non-opaque coating composition consisting of an acrylated polyurethane, at least one polyfunctional acrylic acid ester monomer selected from neopentyl glycol diacrylate, trimethylol propane triacrylate, hexane diol diacrylate, and 1,3-butylene diacrylate, and a photoinitiator. The coating of the article is clear, mar, abrasion, chemical and solvent resistant, is non-opaque, is compatible with and has improved adhesion to the polycarbonate substrate, especially after exposure to weathering. Said coating comprising a UV-cured composition containing the photoreaction products of certain UV-curable polyfunctional acrylic monomers and certain UV-curable acrylic modified polymers.

In the practice of this invention, any of the aromatic polycarbonates can be employed herein. These are homopolymers and copolymers and mixtures thereof that are prepared by reacting a dihydric phenol with a carbonate precursor. Typical of some of the dihydric phenols that may be employed in the practice of this invention are bisphenol-A (2,2-bis(4-hydroxyphenyl) propane), bis(4-hydroxyphenyl)-methane, 2,2-bis(4-hydroxy-3-methylphenyl) propane, 3,3-bis(4-hydroxyphenyl)pentane, 2,2-bis(3,5-dichloro-4-hydroxyphenyl)propane, 2,2-bis(4-3,5-dibromo-4-hydroxyphenyl) propane, bis(3-chloro-4-hydroxyphenyl) methane. Other dihydric phenols of the bisphenol type are also available and are disclosed in US—A—2,999,835, 3,028,365 and 3,334,154.

It is, of course, possible to employ two or more different dihydric phenols or a copolymer of a dihydric phenol with a glycol or with hydroxy or acid terminated polyester, or with a dibasic acid in the event a carbonate copolymer or interpolymer rather than a homopolymer is desired for use in the preparation of the aromatic carbonate polymers of this invention. Also employed in the practice of this invention may be blends of any of the above materials to provide the aromatic carbonate polymer.

The carbonate precursor may be either a carbonyl halide, a carbonate ester or a haloformate. The carbonyl halides which can be employed herein are carbonyl bromide, carbonyl chloride and mixtures thereof. Typical of the carbonate esters which may be employed herein are diphenyl carbonate, di-(halophenyl)carbonates such as di-(chlorophenyl) carbonate, di-(bromophenyl) carbonate, di-(trichlorophenyl) carbonate, di-(tribromophenyl) carbonate, etc., di-(alkylphenyl) carbonate such as di(tolyl) carbonate, etc., di-(naphthyl) carbonate, di-(chloronaphthyl) carbonate, phenyl tolyl carbonate, chlorophenyl chloronaphthyl carbonate, etc., or mixtures thereof. The haloformates suitable for use herein include bis-haloformates of dihydric phenols (bischloroformates of hydroquinone, etc.) or glycols (bishaloformates of ethylene glycol, neopentyl glycol, polyethylene glycol, etc.). While other carbonate precursors will occur to those skilled in the art, carbonyl chloride, also known as phosgene, is preferred.

Also included are the polymeric derivatives of a dihydric phenol, a dicarboxylic acid and carbonic acid. These are disclosed in US—A—3,169,121.

The aromatic carbonate polymers of this invention may be prepared by employing a molecular weight regulator, an acid acceptor and a catalyst. The molecular weight regulators which can be employed in carrying out the process of this invention include monohydric phenols such as phenol, chroman-I, para-tertiary-butyl-phenol, para-bromophenol, primary and secondary amines, etc. Preferably, phenol is employed as the molecular weight regulator.

A suitable acid acceptor may be either an organic or an inorganic acid acceptor. A suitable organic acid acceptor is a tertiary amine and includes such materials as pyridine, triethylamine, dimethylaniline, tributylamine, etc. The inorganic acid acceptor may be one which can be either a hydroxide, a carbonate, a bicarbonate, or a phosphate of an alkali or alkaline earth metal.

The catalysts which are employed herein can be any of the suitable catalysts that aid the polymerization of bisphenol-A with phosgene. Suitable catalysts include tertiary amines such as, for example, triethylamine, tripropylamine, N,N-dimethylaniline, quaternary ammonium compounds such as, for example, tetraethylammonium bromide, cetyl triethyl ammonium bromide, tetra-n-heptylammonium iodide, tetra-n-propyl ammonium bromide, tetramethyl ammonium chloride, tetramethyl ammonium hydroxide, tetra-n-butyl-ammonium iodide, benzyltrimethylammonium chloride and quaternary phosphonium compounds such as, for example, n-butyltriphenyl phosphonium bromide and methyltriphenyl phosphonium bromide.

Also included herein are branched polycarbonates wherein a polyfunctional aromatic compound is reacted with the dihydric phenol and carbonate precursor to provide a thermoplastic randomly branched polycarbonate.

These polyfunctional aromatic compounds contain at least three functional groups which are carboxyl, carboxylic anhydride, haloformyl or mixtures thereof. Examples of these polyfunctional aromatic compounds which may be employed in the practice of this invention include: trimellitic anhydride, trimellitic acid, trimellityl trichloride, 4-chloroformyl phthalic anhydride, pyromellitic acid, pyromellitic dianhydride, mellitic acid, mellitic anhydride, trimesic acid, benzophenonetetracarboxylic acid, benzophenonetetracarboxylic anhydride and the like. The preferred polyfunctional aromatic compounds are trimellitic anhydride or trimellitic acid, or their haloformyl derivatives.

Also included herein are blends of a linear polycarbonate and a branched polycarbonate.

The first component of the UV curable coating compositions of the present invention is a polyfunctional acrylate ester monomer.

The polyfunctional acrylate ester monomers of the present invention are neopentyl glycol diacrylate, trimethylol propane triacrylate, hexanediol diacrylate and 1,3-butyleneglycol diacrylate.

These acrylate esters and their production are well known to those skilled in the art. One method of producing the di-, tri-acrylate esters involves reacting acrylic acid with a di- or tri-hydroxyl compound to produce the diester, triester.

The second component of the coating compositions of the present invention is an acrylated polyurethane. It is a polymer type whose structure and preparation are known in the art. It has UV reactive acrylate groups incorporated into the polymer. Generally, these acrylate modified polymers have the general structure represented by the formula

$$\text{Polymer} \;-\!\!\!\![\text{Acrylate}]_x$$

wherein x is an integer of from 1 to about 5 and Polymer is an n valent polymeric material. Thus, a difunctional polymer, wherein x is 2, would have a structure represented by the formula

Acrylate—Polymer—Acrylate,

a trifunctional polymer, wherein x is 3, would have the structure represented by the formula

Acrylate—Polymer—Acrylate,
|
Acrylate

and so forth.

Thus, a polymer having monofunctional acrylates attached thereto would be represented by the formula

$$\text{Polymer}\ [-O-\overset{O}{\overset{\|}{C}}-CH=CH_2]_x$$

wherein polymer and x are as defined above. A polymer having polyfunctional acrylates attached thereto would be represented by the formula

$$\text{Polymer}-(R-[O-\overset{O}{\overset{\|}{C}}-CH=CH_2]_n)_x$$

wherein Polymer, n, and x are as defined above, and R is a n functional hydrocarbon residue, a n functional substituted hydrocarbon residue, a n functional hydrocarbon residue containing at least one ether linkage, or a n functional substituted hydrocarbon residue containing at least one ether linkage.

Polymers having both monofunctional and polyfunctional acrylate groups attached thereto are also useful in the practice of the present invention. These types of acrylate modified polymers are represented by the structural formula

$$[H_2C=CH-\overset{O}{\overset{\|}{C}}-O]_z\ \text{Polymer}\ \ -(R-[O-\overset{O}{\overset{\|}{C}}-CH=CH_2]_n)_y$$

wherein Polymer, R, and n are as defined above, and y and z are integers having a value of from 1 to 3, provided that the sum of y + z does not exceed 5.

Exemplary typical acrylate modified polymers are acrylate urethanes represented by the formula

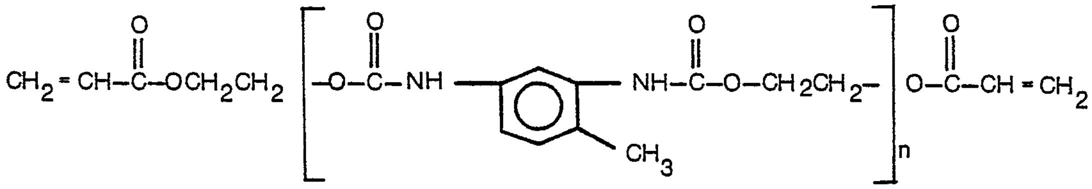

Acrylate modified polymers are the acrylate urethanes as described in US—A—3,297,745, acrylate alkyd urethanes as described in US—A— 3,673,140.

Generally, the coating compositions of the present invention contain a sufficient amount of monomer to give relatively free flowing solutions; however, a suitable organic solvent such as xylene, toluene, benzene and the like may optionally be incorporated in the coating compositions to lower the viscosity thereof. The coating compositions generally contain, in % by weight, from about 30% to about 90%, and preferably from about 40% to about 80% of said polyfunctional acrylate ester monomer, and from about 10% to about 70%, preferably from about 20% to about 60%, of the acrylated polyurethane.

The photocurable coating compositions also contain a photosensitizing amount of photoinitiator, i.e., an amount effective to effect the photocure of the coating composition. Generally, this amount is from about 0.01% to about 10% by weight, preferably from about 0.1% to about 5% by weight of the photocurable coating composition. These additives and the cure thereof are generally well known in the art. Some nonlimiting examples of these UV radiation photosensitizers include ketones, such as benzophenone, acetophenone, benzil, benzyl methyl ketone; benzoins and substituted benzoins such as benzoin methyl ether, $\alpha$-hydroxymethyl benzoin isopropyl ether; halogen containing compounds such as $\alpha$-bromoacetophenone, p-bromoacetophenone, $\alpha$-chloromethylnaphthalene, and the like.

The coating compositions of the instant invention may also optionally contain various flatting agents, surface active agents, thixotropic agents, UV light absorbers and dyes. All of these additives and the use thereof are well known in the art and do not require extensive discussions. Therefore, only a limited number will be referred to, it being understood that any compounds possessing the ability to function in such a manner, i.e., as a flatting agent, surface active agent, UV light absorber, and the like,

can be used so long as they do not deleteriously affect the photocuring of the coating compositions and do not adversely affect the non-opaque character of the coating.

The various surface-active agents, including anionic, cationic and nonionic surface-active agents are described in *Kirk-Othmer Encyclopedia of Chemical Technology*, Vol. 19, Interscience Publishers, New York, 1969, pp. 507—593, and *Encyclopedia of Polymer Science and Technology*, Vol. 13, Interscience Publishers, New York, 1970, pp. 477—486.

The ultraviolet light absorbing compounds which can optionally be present in an amount effective to protect the polycarbonate substrate from the degradative effects of ultraviolet light, provided that they do not unduly interfere with or hinder the photocuring of the coating compositions. Some nonlimiting examples of suitable ultraviolet light absorbing compounds are benzophenone derivatives such as 2,2′-dihydroxybenzophenone, 2,2′-dihydroxy-4,4′-dimethoxybenzophenone, 2,2′-dihydroxy-4,4′-diethoxybenzophenone, 2,2′-dihydroxy-4,4′-dipropoxybenzophenone, 2,2′-dihydroxy-4,4′-dibutoxybenzophenone, 2,2′-dihydroxy-4-methoxy-4′-ethoxybenzophenone, 2,2′-dihydroxy-4-methoxy-4′-propoxybenzophenone, 2,2′-dihydroxy-4-methoxy-4′-butoxybenzophenone; and the like; and benzotriazole derivatives such as 2-(2′-hydroxy-5′-methylphenyl)-benzotriazole, 2-(2′-hydroxy-5′-tert-butylphenyl) benzotriazole, 2-(2′-hydroxy-3′-methyl-5′-tert-butylphenyl) benzotriazole, 2-(2′-hydroxy-5′-cyclohexylphenyl)-benzotriazole, 2-(2′-hydroxy-3′,5′-dimethylphenyl) benzotriazole, and the like.

In the practice of the present invention, the photocurable coating compositions are first compounded by adding together the polyfunctional acrylic acid ester monomer, the polymerizable acrylated polyurethane, the UV photoinitiator, and, optionally, any of the other aforementioned additives. Additionally, if so desired to reduce the viscosity of the coating formulation, an organic solvent may be incorporated into the formulation. Generally, the amount of solvent, if any, present should be such that evaporation of the solvent occurs before any deleterious effect on the substrate due to the aggressiveness (in the chemical etching sense) of the coating compositions develops. The various components are thoroughly mixed so as to form a generally homogeneous coating composition. A thin, uniform film of the coating solution is then applied onto the polycarbonate surface by any of the known means such as dipping, spraying, roll-coating and the like. Generally, the coating composition is applied in an amount sufficient to provide a cured coating of from about .1 mil to about .5 mil, preferably from about .2 mil to about .3 mil thick (1 mil = 25.4 $\mu$m). The coating is then cured in an inert, e.g., nitrogen, atmosphere, by UV irradiation which can have a wavelength of from 1849A. to 4000A. The lamp systems used to generate such radiation can consist of ultraviolet lamps which can consist of discharge lamps, as for example, xenon, metallic halide, metallic arc, such as low or high pressure mercury vapor discharge lamps, etc., having generating pressure of from as low as a few milli- torr up to about 10 atmospheres, can be employed. After UV curing, there is present on the surface of the polycarbonate article a hard, non-tacky, non-opaque, mar, abrasion and chemical resistant coating which is tenaciously adhered to the polycarbonate. The coating is comprised of the photoreaction product of the polyfunctional acrylic ester monomer and the acrylated polyurethane.

Upon the application of UV light, the composition is cured by the polymerization of the further polymerizable acrylated polyurethane. These polymers further polymerize through the olefinic unsaturation of the acrylate groups. Besides further chain growth of the acrylate modified polymers, crosslinking of these polymers occurs through the olefinic unsaturation of the acrylate groups. The polyfunctional acrylic ester monomers, besides serving as crosslinking agents for the acrylate modified polymers, also form polymers with each other, which polymers can in turn crosslink with each other or with the acrylate modified polymers.

## PREFERRED EMBODIMENT OF THE INVENTION

In order to more fully and clearly illustrate the present invention, the following specific examples are presented. It is intended that the examples be considered as illustrative rather than limiting the invention disclosed and claimed herein.

### Example 1

An aromatic polycarbonate is prepared by reacting 2,2-bis(4-hydroxyphenyl) propane and phosgene in the presence of an acid acceptor and a molecular weight regulator and having an intrinsic viscosity of 0.57. The product is then fed to an extruder, which extruder is operated at about 265°C and the extrudate is comminuted into pellets.

The pellets are then injection molded at about 315°C into test panels of about 4 in. by 4 in. by abolut 1/8 in. thick (10,16 cm by 10,16 cm by 3,2 mm thick). The test panels are subjected to an abrasion test and an adhesion test.

The abrasion test is one wherein test panels having a 1/4 inch (6,35 mm) diameter hole cut in the center are subjected to a Taber Abraser. The Taber Abraser is equipped with CS—10F wheels which are resurfaced every 200 cycles by abrading for 25 cycles on a S—11 refacing disc. The weights used in combination with the CS—10F wheels are 500 gm. weights. Initial measurements of % Haze are made at four places around the future wear track of the sample using a Gardner Hazemeter. The sample is abraded for 100 cycles, cleaned with isopropanol, and the % Haze is remeasured at the same four places. The four differences in % Haze are calculated and averaged to give the %Δ Haze.

The adhesion test consists of using a multiple blade tool to cut parallel grooves through the coating into the substrate, the sample is then rotated 90° and the cutting process is repeated. This leaves a grid pattern of 1 mm squares cut into the coating. An adhesive tape is applied over the crosshatched area and quickly pulled off. A sample fails the adhesion test if any of the squares are pulled off.

Example 2

An acrylated urethane resin — acrylate monomer composition is made as follows. To a dry 1 liter flask equipped with a stirrer, reflux condenser and addition funnel 174.2 parts by weight of tolylene diisocyanate and 416.6 parts by weight of hexanediol diacrylate are added. The flask is heated to 50°C employing a nitrogen sparge. To a mixture of 33.6 parts by weight of pentaerythritol triacrylate and 208.8 parts by weight of 2-hydroxyethyl acrylate is added 0.04 parts by weight of phenothiazine. The pentaerythritol triacrylate/hydroxyethyl acrylate/phenothiazine mixture is added from the addition funnel to the stirred mixture of tolylene diisocyanate in hexanediol diacrylate over a two hour period. The mixture is then heated at 60°C with stirring for three hours. After this time, the resulting reaction product is allowed to cool to room temperature and 4.2 parts by weight of the pentaerythritol triacrylate-hydroxyethyl acrylate-phenothiazine is added to the product to react with any unreacted isocyanate.

Example 3

A coating composition is prepared by blending 100 parts by weight of the acrylated urethane resin-acrylate monomer composition prepared in Example 2 with 2 parts by weight of $\alpha,\alpha$-diethoxy acetophenone, and 0.5 parts by weight of a surface active agent BYK—300 produced by Mallinckrodt Chemical Company. A film approximately 0.3 mils (0.00762 mm) thick of this coating composition is applied to a polycarbonate panel prepared in accordance with Example 1 using a wire wound drawdown bar. The film is cured by passing the coated panel twice through a Linde UV Curing Apparatus at approximately 50 feet/min (15,24 m/min). The UV Curing Apparatus consists essentially of a nitrogen blanketed conveyor containing germicidal and medium pressure mercury vapor lamps which emit light mainly at 2537A°, 3150A° and 3654A°. The film is tack-free, cured, abrasion and solvent resistant after this treatment. The coated polycarbonate panel i- subjected to the Taber Abrasion Test and to the Adhesion Test and the results are set forth in Table II.

Example 4

An acrylated urethane resin-acrylate monomer composition is made as follows. To a dry liter flask equipped with a stirrer, reflux condenser and addition funnel are added 174.2 parts by weight of tolylene diisocyanate and 416.6 parts by weight of neopentylglycol diacrylate. The flask is heated to 50°C employing a nitrogen sparge. To a mixture of 33.6 parts by weight of pentaerythritol triacrylate and 208.8 parts by weight of 2-hydroxyethyl acrylate is added 0.04 parts by weight of phenothiazine. The pentaerythritol triacrylate-hydroxyethyl acrylate-phenothiazine mixture is added from the addition funnel to the stirred mixture of tolylene diisocyanate in neopentylglycol diacrylate over a two hour period. The resulting mixture is then heated at 60°C with stirring for three hours. After this time, the resulting reaction product is allowed to cool to room temperature and 4.2 parts by weight of the pentaerythritol triacrylate-hydroxyethyl acrylate-phenothiazine is added to the product to react with any unreacted isocyanate.

Example 5

A coating composition is prepared by blending 100 parts by weight of the acrylated urethane resin-acrylate monomer composition prepared in Example 2 with 2 parts by weight of $\alpha,\alpha$-diethoxy acetophenone and 0.5 parts by weight of BYK—300. A film approximately 0.3 mils (0.00762 mm) thick of this coating composition is applied to a polycarbonate panel prepared in accordance with Example 1 using a wire wound drawdown bar. The film is cured by passing the coated panel twice through a Linde UV Curing Apparatus at approximately 50 feet/min (15,24 m/min). The film is tack free, cured, abrasion and solvent resistant after this treatment. The coated polycarbonate panel is subjected to the Taber Abrasion Test and to the Adhesion Test and the results are set forth in Table II.

Example 6

An acrylated urethane resin-acrylate monomer composition is made as follows. To a dry 1 liter flask equipped with a stirrer, reflux condenser and addition funnel 174.2 parts by weight of tolylene diisocyanate and 416.6 parts by weight of trimethylolpropane triacrylate are added. The flask is heated to 50°C employing a nitrogen sparge. To a mixture of 33.6 parts by weight of pentaerythritol triacrylate and 208.8 parts by weight of 2-hydroxy ethyl acrylate is added 0.04 parts by weight of phenothiazine. The pentaerythritol triacrylate-hydroxy ethyl acrylate-phenothiazine mixture is added from the addition funnel to the stirred mixture of tolylene diisocyanate in trimethylolpropane triacrylate over a two hour period. The mixture is then heated at 60°C with stirring for three hours. After this time, the resulting reaction product is allowed to cool to room temperature and 4.2 parts by weight of the pentaerythritol-hydroxyethyl acrylate-phenothiazine is added to the product to react with any unreacted isocyanate.

Example 7

A coating composition is prepared by blending 100 parts by weight of the acrylated urethane resin-acrylate monomer composition prepared in Example 6 with 2 parts by weight of $\alpha,\alpha$-diethoxy acetophenone and 0.5 parts by weight of BYK—300. A film approximately 0.3 mils (0.00762 mm) thick of this coating composition is applied to a polycarbonate panel prepared in accordance with Example 1 using a wire wound drawdown bar. The film is cured by passing the coated panel twice through a Linde UV Curing Apparatus at approximately 50 feet/min (15,24 m/min). The film is tack free, cured, abrasion and solvent resistant after this treatment. The coated polycarbonate panel is subjected to the Taber Abrasion test and to the Adhesion Test and the results are set forth in Table II.

Example 8

An acrylated urethane resin is made by reacting 41.6 parts by weight of a polycaprolactone with 55.6 parts by weight of isophorone diisocyanate in 54 parts by weight of 1,6-hexanediol diacrylate for 8 hours at room temperature and then with 36.4 parts by weight of hydroxyethylacrylate for 11 hours at 70°C. A blend is made containing 40 parts by weight of the acrylated urethane resin, 43 parts by weight of neopentylglycol diacrylate, 17 parts by weight of 1,6-hexanediol diacrylate, 2 parts by weight of $\alpha,\alpha$-diethoxyacetophenone, and 0.5 parts by weight of BYK—300. A film approximately 0.3 mil (0.00762 mm) thick is applied to a polycarbonate panel made substantially in accordance with Example 1. The film is applied, cured and tested as set forth in Example 3 and the results are set forth in Table II.

Example 9

A blend was made of 40 parts by weight of Actomer X—80 (an acrylated epoxidized linseed oil) produced by Union Carbide Corp. of New York, New York, 60 parts by weight neopentylglycol diacrylate, 2 parts by weight $\alpha,\alpha$-diethoxyacetophenone, and 0.5 parts by weight of BYK—300. A film of this blend is applied to a polycarbonate, cured and tested as in Example 3 and the results are set forth in Table II.

Example 10

A blend is made of 40 parts by weight of Dow XD 8008—04 (an acrylated bisphenol-A diglycidyl ether) produced by Dow Chemical Co., of Midland, Michigan, 60 parts by weight of neopentyl glycol diacrylate, 2 parts by weight of $\alpha,\alpha$-diethoxyacetophenone, and 0.05 parts by weight of BYK—300. A film of this blend is applied to a polycarbonate, cured and tested as in Example 3 and the results are set forth in Table II.

TABLE II

| Example No. | Abrasion (Δ% Haze) | Adhesion |
|---|---|---|
| 1 (no coating) | 34.0 | — |
| 3 | 3.5 | Pass |
| 5 | 4.3 | Pass |
| 7 | 3.6 | Pass |
| 8 | 8.5 | Pass |
| 9 | 17.2 | Fail |
| 10 | 15.9 | Fail |

Examples 11—12

A number of blends are made which are generally similar to Example 2 except the acrylic acid ester monomers are varied. Films of these blends are made and applied to polycarbonate panels and cured substantially in accordance with Example 3. The results are set forth in Table III.

TABLE III

| Example No. | Monomer | Results |
|---|---|---|
| 11 | Ethylene diacrylate | Film wrinkled |
| 12 | Tetraethylene glycol diacrylate | Film wrinkled |

The following are examples of combinations which produce unsatisfactory coatings, i.e., coatings which are inoperative in the present invention.

Examples 13—16

A number of blends are made which are generally similar to Example 2 except the acrylic acid ester monomers are varied. Films of these blends are made and applied to polycarbonate panels and cured substantially in accordance with Example 3. The results are set forth in Table IV.

TABLE IV

| Example No. | Monomer | Results |
|---|---|---|
| 13 | Hydroxyethyl acrylate | Unsatisfactory (too wrinkled) |
| 14 | Ethoxyethyl acrylate | Unsatisfactory (too wrinkled) |
| 15 | Ethylene dimethacrylate | Unsatisfactory (wrinkled and tacky) |
| 16 | 1,3-butylene dimethacrylate | Unsatisfactory (wrinkled and tacky) |

As can be seen from the foregoing Examples and Tables II—IV, only certain combinations of the acrylated resins of this invention and certain polyfunctional acrylate monomers give acceptable results. Thus, satisfactory results are obtained by using a combination of the acrylated urethane resin of this invention in combination with neopentylglycol diacrylate, trimethylolpropane triacrylate, hexanediol diacrylate, or butyleneglycol diacrylate. Unsatisfactory results are obtained using an acrylated bisphenol-A diglycidyl ether and a neopentyl glycol diacrylate; an acrylated epoxidized linseed oil and neopentyl glycol diacrylate; and an acrylated urethane in combination with ethylene diacrylate, or tetraethylene glycol diacrylate. As shown in Table IV, combinations of acrylated urethane resins with ethylene dimethacrylate or butylene dimethacrylate or with monofunctional acrylates are inoperative in the practice of the present invention.

It is apparent from this that not all combinations of resins and monomers give films which cure readily on polycarbonates to give smooth films which have good abrasion resistance and adhesion to the polycarbonate. Certain combinations of acrylated resins with polyfunctional acrylic acid ester monomers give better results than others, while the methacrylate monomers and monofunctional acrylate monomers are unsuitable in forming the coatings of the present invention. In fact, there appears to be no way in which one may predict from the starting blend that this set of optimum properties will be obtained.

From the foregoing Examples, it is clear that a combination of an acrylated urethane resin as described in Example 2 with a 1,3-butylene diacrylate monomer, 1,6-hexanediol diacrylate monomer, neopentylglycol diacrylate, and trimethylolpropane triacrylate monomer results in a coating composition which upon curing gives a coating having excellent properties, i.e., a coating comprising the photoreaction product of an acrylated urethane and a polyfunctional acrylate monomer selected from the group consisting of neopentylglycol diacrylate, 1,3-butylene diacrylate, 1,6-hexanediol diacrylate, and trimethylolpropane triacrylate, gives excellent results.

**Claims**

1. A non-opaque shaped polycarbonate article having on at least one surface thereof an ultraviolet light-curable non-opaque coating composition consisting of:

(i) an acrylated polyurethane;

(ii) at least one polyfunctional acrylic acid ester monomer selected from neopentyl glycol diacrylate, trimethylol propane triacrylate, hexane diol diacrylate, and 1,3-butylene diacrylate and

(iii) a photoinitiator.

2. A non-opaque shaped polycarbonate article according to claim 1, wherein said coating composition contains an ultra-violet light absorber.

3. A non-opaque shaped polycarbonate article consisting of the article as claimed in claim 1 or 2 in which said coating composition has been cured by means of ultra-violet light.

**Revendications**

1. Une pièce de polycarbonate façonnée non opaque portant sur au moins une de ses surfaces une composition de revêtement non opaque durcissable par la lumière ultraviolette constituée par:

(i) un polyuréthanne acrylaté;

(ii) au moins un monomère ester d'acide acrylique polyfonctionnel choisi parmi le diacrylate de néopentylglycol, le triacrylate de triméthylolpropane, le diacrylate d'hexanediol et le diacrylate de butylène-1,3 et

(iii) un photoinitiateur.

2. Une pièce de polycarbonate façonnée non opaque selon la revendication 1, caractérisée en ce que la composition de revêtement contient un agent absorbant la lumière ultraviolette.

3. Une pièce de polycarbonate façonnée non opaque constituée par la pièce revendiquée dans la revendication 1 ou 2, caractérisé en ce que l'on a fait durcir la composition de revêtement à la lumière ultraviolette.

**Patentansprüche**

1. Nicht opaker ausgeformter Polycarbonatgegenstand mit einer Überzugsmasse aus einer durch Ultraviolettlicht aushärtbaren, nicht opaken Masse auf wenigstens einer Oberfläche, die aus

I. einem acrylierten Polyurethan,

II. wenigstens einem polyfunktionellen Acrylsäureestermonomeren, ausgewählt aus neopentylglycoldiacrylat, Trimethylolpropan-triacrylat, Hexandiol-diacrylat und 1,3-Butylen-diacrylat, und

III. einem Photoinitiator

besteht.

2. Nicht opaker ausgeformter Polycarbonatgegenstand nach Anspruch 1, worin die Überzugsmasse einen Ultraviolettlicht-Absorber enthält.

3. Nicht opaker ausgeformter Polycarbonatgegenstand bestehend aus dem Gegenstand nach Anspruch 1 oder Anspruch 2, bei dem die Überzugsmasse mittels Ultraviolettlicht ausgehärtet worden ist.